(19) Europäisches Patentamt
European Patent Office
Office européen des brevets

(11) Publication number: 0 124 372 B1

(12) # EUROPEAN PATENT SPECIFICATION

(45) Date of publication of patent specification: **26.10.88**

(51) Int. Cl.$^4$: **B 62 D 61/06,** B 62 D 31/00

(21) Application number: **84302871.3**

(22) Date of filing: **27.04.84**

(54) **Three-wheeled motor vehicle.**

(30) Priority: **28.04.83 JP 73741/83**
**28.04.83 JP 73742/83**
**28.04.83 JP 74743/83**
**28.04.83 JP 73744/83**
**28.04.83 JP 63056/83 u**
**28.04.83 JP 63057/83 u**
**28.04.83 JP 63060/83 u**

(43) Date of publication of application:
**07.11.84 Bulletin 84/45**

(45) Publication of the grant of the patent:
**26.10.88 Bulletin 88/43**

(84) Designated Contracting States:
**DE FR GB IT**

(56) References cited:
**DE-C- 825 353**
**FR-A- 885 010**
**FR-A-1 089 028**
**GB-A-2 111 442**

**STERN, no. 43, October 18, 1979, pages 184-188**

(73) Proprietor: **HONDA GIKEN KOGYO KABUSHIKI KAISHA**
**27-8, Jingumae, 6-chome**
**Shibuya-ku, Tokyo 150 (JP)**

(72) Inventor: **Irimajiri, Shoichiro**
**1-8-5, Kobe**
**Suzuka-shi Mie (JP)**
Inventor: **Komuro, Katsusuke**
**1-21-3, Wakaba-cho**
**Chofu-shi Tokyo (JP)**
Inventor: **Aikawa, Kunihiko**
**3-17-16, Chuo-cho**
**Higashikurume-shi Tokyo (JP)**

(74) Representative: **Leale, Robin George et al**
**FRANK B. DEHN & CO. Imperial House 15-19 Kingsway**
**London WC2B 6UZ (GB)**

**EP 0 124 372 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a three-wheeled motor vehicle, and more particularly to a body configuration for such a motor vehicle. There has been a strong demand in reent years for automobiles which can be driven easily by anybody and provide good fuel economy.

The present invention has been made basically with a view to meeting the above demand. The fundamental concepts which the inventors have had in mind in arriving at the invention are as follows:

Automobiles that can be driven easily by anybody should not be able to fall over of their own accord, or stated otherwise should be other than one-wheeled or two-wheeled vehicles that require a certain level of driving skill on the part of the driver in order to be manoeuvered well. The inventors have therefore selected three wheels for a motor vehicle to be constructed, which is the least number for stably supporting the vehicle on the ground. For better fuel economy, the vehicle should be light in weight and have a small aerodynamic drag. Good mileage therefore hinges largely on the design of the shape of the vehicle body. The inventors have made efforts to design a vehicle body of a configuration which has a small forward projection area and a small cross-sectional change, while providing a sufficient vehicle compartment space, and which is as streamlined as possible.

Based on the foregoing fundamental concept, it is an object of the present invention to provide a three-wheeled motor vehicle having a small aerodynamic drag.

The magazine "Stern", No. 43 of 1979, discloses a vehicle identified therein as the "Deluxe Freeway II". This is three-wheeled motor vehicle having two front wheels, a single rear wheel, an engine disposed between said front wheels, a driver's compartment, and a vehicle body including a front portion covering said engine and said front wheels and a rear portion disposed behind said front portion and covering said compartment and said rear wheel, said front portion having a relatively wide and flat shape and said rear portion being narrower than said front portion and being progressively higher in the rearward direction over a substantial proportion of said rear portion.

According to the present invention there is provided such a three-wheeled motor vehicle, characterised in that the said vehicle body also includes lateral wing portions on each side which extend longitudinally rearwardly from behind the front wheels and taper into said body rear portion, whereby the vehicle body has a substantially constant transverse cross-sectional area throughout a substantial proportion ofboth said front and rear portions thereof, including the transition between said front and rear portions.

Some embodiments of the invention will now be described by way of example and with reference to the accompanying drawings, in which:-

FIG. 1 is a perspective view of a three-wheeled motor vehicle according to the present invention;

FIG. 2 is a side elevational view of the three-wheeled motor vehicle shown in FIG. 1;

FIG. 3 is a plan view of the three-wheeled motorvehicle of FIG. 1;

FIG. 4 is a rear elevational view of the three-wheeled motor vehicle of FIG. 1;

FIG. 5 is a graph of various transverse cross-sectional areas of the three-wheeled motor vehicle along a longitudinal axis thereof;

FIG. 6 is a cross-sectional view taken along line VI - VI of FIG. 2;

FIG. 7 is a perspective view of a monocoque construction having a driver's compartment;

FIG. 8 is a schematic plan view, with parts in cross section, of a vehicle body with the monocoque construction of FIG. 7 assembled therein;

FIG. 9 is a perspective view of a three-wheeled motor vehicle according to the present invention, as constructed for a wind-tunnel experiment;

FIG. 10 is a plan view of the three-wheeled motor vehicle shown in FIG. 9;

FIG. 11 is a perspective view of a threewheeled motor vehicle of a comparative example not according to the invention, as constructed for a wind-tunnel experiment;

FIG. 12 is a plan view of the three-wheeled motor vehicle of FIG. 11;

FIG. 13 is a perspective view of a steering column support construction in a front portion of a driver's compartment in a vehicle according to the present invention;

FIG. 14 is a perspective view of the vehicle, showing a rear wheel suspension;

FIG. 15 is a perspective view of a modified three-wheeled motor vehicle of the present invention, having a laterally openable door; and

FIG. 16 is a plan view of the three-wheeled motor vehicle illustrated in FIG. 15.

FIGS. 1 through 4 show a first embodiment of a three-wheeled motor vehicle according to the present invention. The three-wheeled motor vehicle includes a vehicle body 1 having a front engine space 10 and a rear driver's compartment 20. Two front wheels 2 and a single rear wheel 3 are rotatably mounted on the vehicle body 1. The engine space 10 is covered with an engine hood 1a disposed above an engine arranged in the engine space 10 transversely and centrally of the vehicle body 1, and a pair of front fenders 1c extending contiguously from the engine hood 1a in opposite directions away from each other. The engine space 10 has therefore a wide, flat configuration. The driver's compartment 20 is positioned behind the engine space 10 in contiguous relation thereto and is of a relatively small width substantially equal to that of the engine hood 1a. The driver's compartment 20 includes a roof 1b doubling as a windshield and becoming progressively higher toward a highest roof portion 1d adjacent the rear end portion of the vehicle body 1. Thus, as shown in FIG. 2, the vehicle body 1 is substantially triangular in shape when viewed in side elevation, to provide a compartment space large enough for the driver, seated on a seat 4 therein, to sit and move therein in order to manoeuvre the motor vehicle.

The driver's compartment 20, which is itself narrow, includes front lateral wings 1e projecting away from each other and having surfaces blending into the surfaces of the front fenders 1c. The front fenders 1c and the front lateral wings 1e project laterally to a progressively lesser extent in the rearward direction of the vehicle body 1, and have contiguous side surfaces 1g, 1h, respectively, which taper progressively toward each other in the rearward direction of the vehicle body 1. Accordingly, as shown in FIG. 3, the front portion of the vehicle body 1 has a substantially triangular shape when viewed in plan, to guide air streams to flow smoothly along the tapered side surfaces 1g, 1h of the front fenders 1c and the lateral wings 1e toward the rear end of the vehicle body 1. A reflector plate 5 is attached to the tapered side surface 1g of each front fender 1c to allow light reflected by the reflector plate 5 to be seen by other drivers or observers in a wide arc extending from a position behind the motor vehicle to a position laterally of the motor vehicle.

With the engine space 10 and the driver's compartment 20 thus shaped, the transverse cross-sectional areas of the vehicle body 1 remain substantially the same along a longitudinal axis thereof from the wide and flat front end portion to the narrow and highest portion.

FIG. 5 is a graph showing various transverse cross-sectional areas of the vehicle body 1 of the vehicle shown in FIGS. 1 through 4, along the longitudinal axis thereof, with the wheel base being 2,200 mm, the tread between the front wheels 2 being 1,300 mm, and the largest vehicle height H being 1,350 mm. The graph has a horizontal axis representing the distance x from the axial center of the front wheel 2 in the direction of the arrow of FIG. 2, which is regarded as positive. The dotted-line curve in FIG. 5 is indicative of the varying transverse cross-sectional areas of a vehicle body having no lateral wings behind its front fenders.

FIGS. 9 and 10 illustrate a vehicle body 51 of a three-wheeled motor vehicle constructed according to the present invention for a wind-tunnel experiment. FIGS. 11 and 12 show a vehicle body 61 of a three-wheeled motor vehicle according to a comparative example, as constructed for a wind-tunnel experiment for comparison with the vehicle body 51. The vehicle body 61 has front fenders 61c but no lateral wings behind the front fenders, with the result that the overall vehicle body 61 has a substantially T-shaped configuration when viewed in plan. A wind-tunnel experiment was conducted using the vehicle bodies 51 and 61, and the result of the wind-tunnel experiment indicated that the coefficient of air resistance of the T-shaped vehicle body 61 was 0.386 while that of the vehicle body 51 according to the present invention was 0.313.

The smaller coefficient of air resistance results from the fact that an air stream flowing rearward from the upper and side surfaces of the front fenders 1c is guided along the lateral wings 1e toward rear side surfaces of the vehicle body 1 without burbling from the lateral wings 1e, thus reducing any resistance tending to cause the air current to burble from the sides of the vehicle body.

The vehicle body 1 has a forward projection area of $10.92 \times 10^5$ $mm^2$, which is the sum of the transverse cross-sectional area of the front portion of the vehicle body 1 and the transverse cross-sectional area of the upper half of the vehicle body rear portion. The transverse cross-sectional area of any portion of the vehicle is much smaller than the forward projection area thereof. This, together with the fact that the transverse crosssectional area of the vehicle body is rendered substantially constant by the lateral wings 1e, results in the small coefficient of air resistance.

As illustrated in FIGS. 6 and 7, a driver's compartment 20 may comprise a body 30 of box-shaped monocoque structure having a side sill 31 on one side, a relatively high side member 32, a front toe board 33, and a rear pillar 34 extending between the side sill 30 and the side member 32. A gullwing door 6 is hinged to an upper edge of the side member 32 so that the driver's compartment 20 is openable on one side thereof. The lateral wings 1e are formed by laterally bulging outer panels 32a, 6a of the side member 32 and the door 6, respectively.

As shown in FIG. 8, a fuel tank 15 is mounted by mounts 14 in a large interior space in the lateral wing 1e on the side member 32. Thus, the fuel tank 15 is housed in the side member 32 of the monocoque structure 30 for effective space utilization therein. Generally, three-wheeled motor vehicles having two front wheels have better cornering characteristics and a comparatively stable vehicle body, as the center of gravity of the vehicle is positioned closer to the front end of the vehicle. With the fuel tank 15 disposed in a front portion of the side member 32, rather than below the rear floor portion of the vehicle body as in a conventional motor vehicle, the center of gravity of the motor vehicle is displaced further forward, thereby to improve cornering characteristics. Designated in FIGS. 7 and 8 by the reference numeral 7 is a mounting frame for an engine E, connected to the front end of the monocoque structure 30 and extending forwardly thereof. Designated in FIG. 4 by the reference numeral 8 is an air ventilation hole defined in a rear spoiler 1f on the rear end of the vehicle body 1 and communicating with the driver's compartment.

As seen in FIG. 13, to the toe board 33 at the front end of the monocoque structure 30 is attached a support frame 21 for an instrument panel 22 on which various instruments are provided. A steering column 24, through which a steering shaft connected to a steering wheel 23 extends, is supported by a bracket 25 on the support frame 21. The support frame 21 has a lateral end fixed to the side member 32. The toeboard 33, the side member 32, and the support frame 21 attached therebetween jointly constitute a truss for supporting the steering column 24 on the support frame 21 with a high degree of rigidity.

FIG. 14 illustrates a suspension for the rear wheel 3. The rear wheel 3 is rotatably supported by a rear fork 16 having a pair of laterally spaced fork members 16a pivotally mounted on a lower rear end 34a of the rear pillar 34 of the monocoque structure 30. The suspension includes a damping member or shock absorber 17 having one end connected to one of the fork members 16a and an opposite end to a rear end of the side member 32. Although the weight of the vehicle body 1 acts on the right-hand side (as seen in FIG. 14) of the monocoque structure 30 due to reactive forces from the damping member 17, the relatively high side member 32 at the right-hand side of the structure 30 has a large section modulus against a vertical bending moment, so that the weight of the vehicle body 1 can reliably be borne by the monocoque structure 30. The side member 32 may be of a hollow shape which is light in weight. Accordingly, it is not necessary to reinforce the monocoque structure 30 with separate stiffening members, and hence the vehicle body 1 is light in weight and of a simple structure.

FIGS. 15 and 16 illustrate a three-wheeled motor vehicle according to another embodiment of the present invention, which has a laterally openable door. As shown in FIG. 16, the motor vehicle has a vehicle body 101 including lateral slanted sides 108, 109 progressively converging toward the central axis of the vehicle body 101 from a wider front portion to a narrower rear portion thereof. A laterally openable door 110 is hinged to one of the slanted sides, namely the left-hand side 108 in the illustrated embodiment. The door has a window 111-1, and the vehicle body 101 also has a front window 111-2 and a right-hand window 111-3. These windows 111-1, 111-2, 111-3 jointly constitute a continuous window surrounding a driver's compartment 120 and extending from the front of the lateral sides of the driver's compartment 120 when the door 110 is closed, as shown in FIG. 16. Although in the illustrated embodiment a single door 110 is provided on the left-hand side of the vehicle body 101, two separate doors may be hinged to the opposite sides of the vehicle body 101.

The door 110 has a hinge 112 at a front edge thereof, at a wider portion of the vehicle body, and is openable away from a narrower vehicle body portion. As a consequence, when the door 110 is opened to the lateral extent which does not extend beyond a line L- L passing through the outermost edge of the front fender parallel to the longitudinal axis of the vehicle body 101, the door 110 provides a large opening 113, opening rearward, to allow the driver easily to get into or out of the driver's compartment 120. FIG. 16 also shows an imaginary position 110' that would be assumed by an opened door hinged at its rear edge to the narrower vehicle body portion. With such a door arrangement, when the door is opened to the line L - L, the size of an opening 113' provided by the door would be extremely small because of the laterally projecting side 108, and hence the door would have to be opened substantially beyond the line L - L to permit the driver readily to get into and out of the compartment 120.

**Claims**

1. A three-wheeled motor vehicle having two front wheels (2), a single rear wheel (3), an engine disposed between said front wheels, a driver's compartment (20), and a vehicle body (1) including a front portion covering said engine and said front wheels and a rear portion disposed behind said front portion and covering said compartment and said rear wheel, said front portion having a relatively wide and flat shape and said rear portion being narrower than said front portion and being progressively higher in the rearward direction over a substantial proportion of said rear portion, characterised in that the said vehicle body also includes lateral wing portions (1e) on each side which extend longitudinally rearwardly from behind the front wheels and taper into said body rear portion, whereby the vehicle body has a substantially constant transverse cross-sectional area throughout a substantial proportion of both said front and rear portions thereof, including the transition between said front and rear portions.

2. A three-wheeled motor vehicle as claimed in claim 1, wherein the said vehicle body front portion includes an engine hood (1a) covering the said engine and a pair of front fenders (1c) projecting laterally from said engine hood over the respective front wheels, and the said lateral wing portions (1e) are disposed behind said front fenders in contiguous relation thereto.

3. A three-wheeled motor vehicle according to claim 1 or 2, wherein the said rear portion of the vehicle body includes a monocoque structure having on at least one side thereof a relatively high side member extended longitudinally of the vehicle body, said side member being hollow and housing a fuel tank therein.

4. A three-wheeled motor vehicle according to claim 3, wherein the said fuel tank is disposed in a front portion of said side member.

5. A three-wheeled motor vehicle according to any preceding claim, wherein the said rear portion of the vehicle body has on at least one side thereof a laterally openable door having a hinge connected to the said front portion of the vehicle body.

6. A three-wheeled motor vehicle according to any preceding claim, including light reflectors mounted on said side surfaces of said front fenders.

**Patentansprüche**

1. Dreirad-Motorfahrzeug, das zwei Vorderräder (2), ein einziges Hinterrad (3), eine Brennkraftmaschine, die zwischen den Vorderrädern angeordnet ist, einen Fahrerraum (20) und eine Fahrzeugkarosserie (1) hat, die ein Vorderteil, das die Brennkraftmaschine und die Vorderräder überdeckt und ein Hinterteil umfaßt, das hinter dem Vorderteil angeordnet ist und den Fahrerraum und die Hinterräder abdeckt, wobei das Vorderteil eine relativ breite und flache Form hat und das Hinterteil schmaler als das Vorderteil ist und in Rückwärtsrichtung über einen beträchtlichen Teil des Hinterteils zunehmend höher wird, dadurch gekennzeichnet, daß die Fahrzeugkarosserie auch Seitenflügelteile (1e) auf jeder Seite umfaßt, die in Längsrichtung hinter den Vorderrädern nach hinten und zu dem Hinterteil der Karosserie sich verjüngend verlaufen, wobei die Fahrzeugkarosserie einen im wesentlichen konstanten Querschnitt über einen wesentlichen Teil sowohl des Vorderteils als auch des Hinterteils einschließlich des Übergangs zwischen dem Vorderteil und dem Hinterteil hat.

2. Dreirad-Motorfahrzeug nach Anspruch 1, bei dem das Vorderteil der Fahrzeugkarosserie eine Motorhaube (1a) umfaßt, die die Brennkraftmaschine überdeckt, sowie ein Paar vorderer Kotflügel (1c), die seitlich von der Motorhaube über die entsprechenden Vorderräder ragen, und bei dem die Seitenflügelteile (1e) hinter den vorderen Kotflügeln angrenzend an dieselben angeordnet sind.

3. Dreirad-Motorfahrzeug nach Anspruch 1 oder 2, bei dem das Hinterteil der Fahrzeugkarosserie eine Schalenkonstruktion aufweist, die wenigstens an einer Seite ein relativ hohes Seitenteil hat, das in Längsrichtung der Fahrzeugkarosserie verläut, wobei das Seitenteil hohl ist und in demselben ein Kraftstofftank untergebracht ist.

4. Dreirad-Motorfahrzeug nach Anspruch 3, bei dem der Kraftstofftank in einem vorderen Teil des Seitenteils angeordnet ist.

5. Dreirad-Motorfahrzeug nach einem der vorangehenden Ansprüche, bei dem das Hinterteil der Fahrzeugkarosserie wenigstens an einer seiner Seite eine zur Seite hin öffenbare Tür aufweist, die ein Gelenk hat, das mit dem Vorderteil der Fahrzeugkarosserie verbunden ist.

6. Dreirad-Motorfahrzeug nach einem der vorangehenden Ansprüche, das Lichtreflektoren enthält, die an den Seitenflächen der vorderen Kotflügel angebracht sind.

**Revendications**

1. Véhicule automobile à trois roues comprenant deux roues avant (2) une roue arrière unique (3), un moteur disposé entre les roues avant un compartiment de conducteur (20) et une carrosserie d'automobile (1) qui comporte une partie avant recouvrant le moteur et les roues avant, et une partie arrière disposée derrière cette partie avant et recouvrant le compartiment et la roue arrière, la partie avant offrant une forme relativement large et plate et la partie arrière étant plus étroite que cette partie avant et étant progressivement plus haute en direction de l'arrière sur une partie proportionnellement notable de cette partie arrière, caractérisé en ce que la carrosserie porte aussi sur chaque côte des parties latérales formant ailes (1e) qui s'étendent dans le sens longitudinal vers l'arrière à patir de derrière les roues avant et convergent pour rejoindre la partie arrière de carrosserie, de sorte que cette carrosserie offre une section transversale dont l'aire est sensiblement constante sur toute l'étendue d'une partie proportionnellement notable d'à la fois ces parties avant et arrière, y compris la transition entre ces parties avant et arrière.

2. Véhicule automobile à trois roues suivant la revendication 1, dans lequel la partie avant de la carrosserie comprend un capot moteur (1a) recouvrant le moteur, et deux gade-boue (1c) faisant saillie dans le sens latéral à partir de ce capot moteur et au-dessus des roues avant respectives, tandis que les parties latérales en forme d'ailes (1e) sont disposées derrière ces garde-boue suivant une disposition relative contiguë par rapport à ceux-ci.

3. Véhicule automobile à trois roues suivant la revendication 1 ou 2, dans lequel ladite partie arrière de la carrosserie comprend une structure monocoque comportant, sur au moins l'un de ces côtés, un élément latéral relativement haut qui s'étend dans le sens longitudinal de la carrosserie, cet élément latéral étant creux et un réservoir de carburant s'y trouvant logé.

4. Véhicule automobile à trois roues suivant la revendication 3, dans lequel le réservoir de carburant est disposé dans une patie avant de l'élément latéral.

5. Véhicule automobile à trois roues suivant l'une quelconque des revendications précédentes, dans lequel la partie arrière de la carosserie comprend, sur au moins l'un de ses côtés, une porte s'ouvrant latéralement et comportant une charnière reliée à la partie avant de la carrosserie.

6. Véhicule automobile à troies roues suivant l'une quelconque des revendications précédentes, comprenant des réflecteurs de lumière montés sur les surfaces latérales des garde-boue avant.

FIG. 1

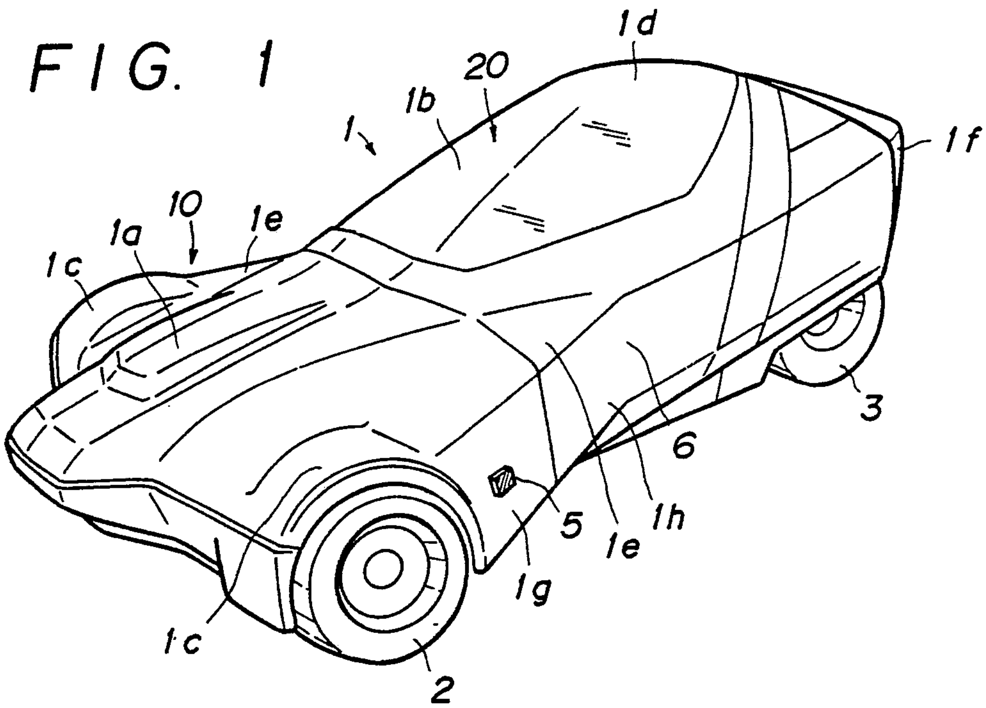
1d
20
1b
1
1f
10
1a
1e
1c
3
6
5
1h
1e
1g
1c
2

FIG. 2

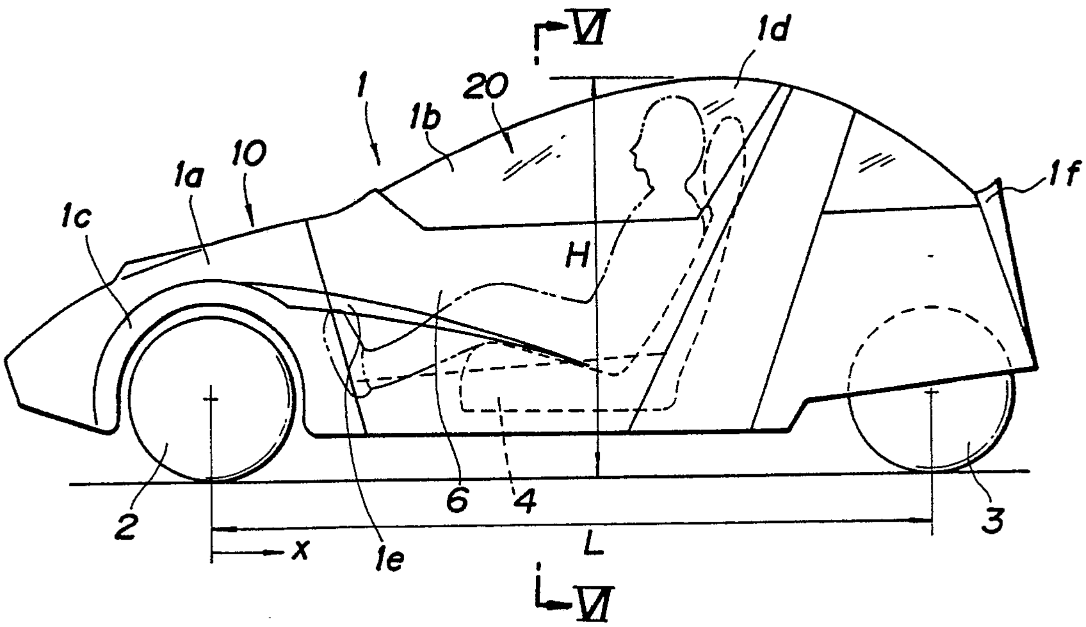
VI
1d
1
20
1b
1f
10
1a
1c
H
2
6
4
3
x
1e
L
VI

FIG. 3

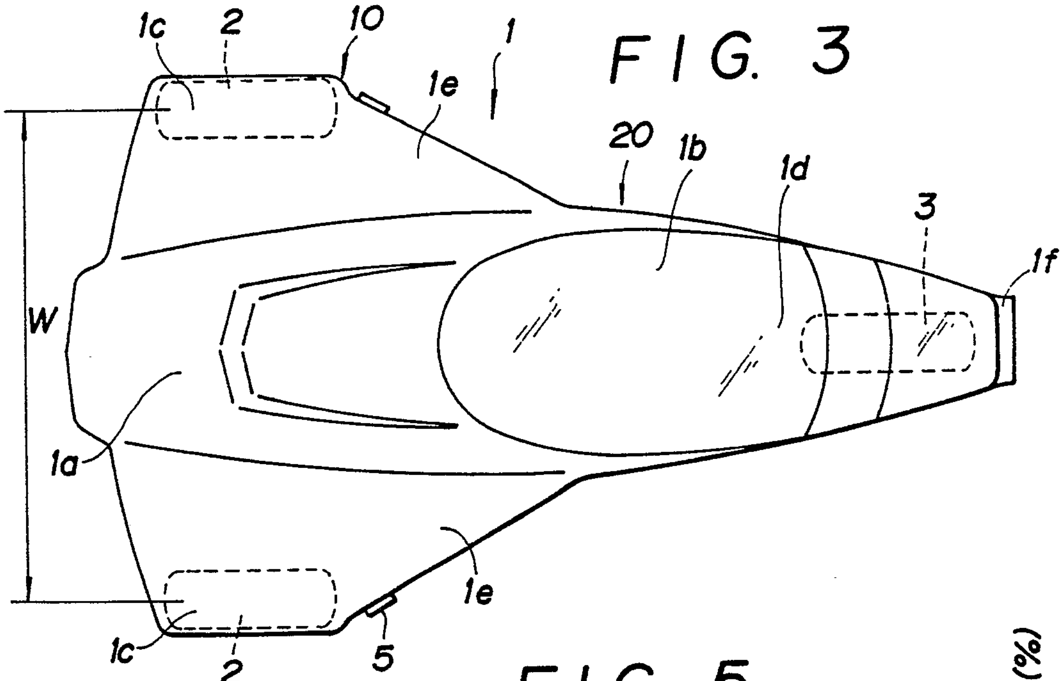
1c
2
10
1
1e
20
1b
1d
3
1f
W
1a
1e
1c
2
5

FIG. 5

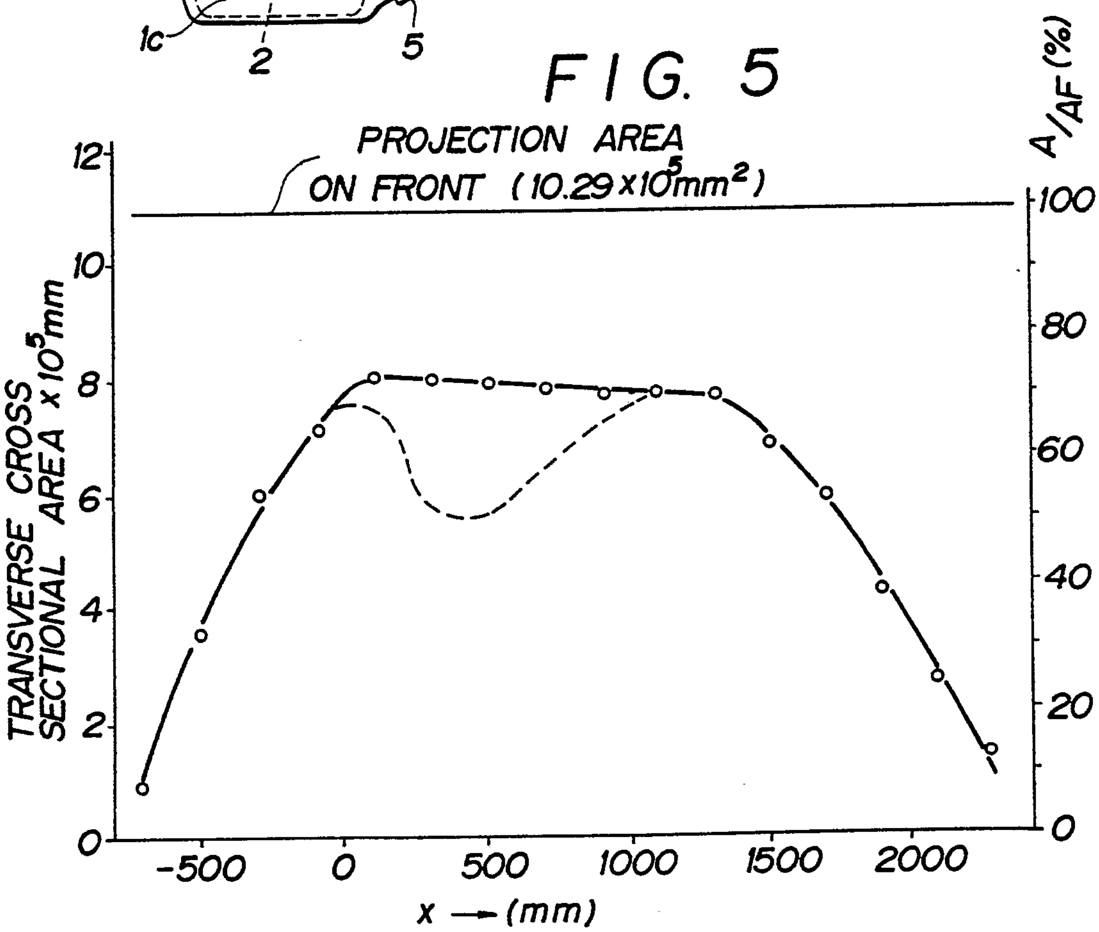
PROJECTION AREA
ON FRONT (10.29 x 10^5 mm^2)
A/AF (%)
TRANSVERSE CROSS SECTIONAL AREA x 10^5 mm
12
10
8
6
4
2
0
100
80
60
40
20
0
-500
0
500
1000
1500
2000
x → (mm)

FIG. 4

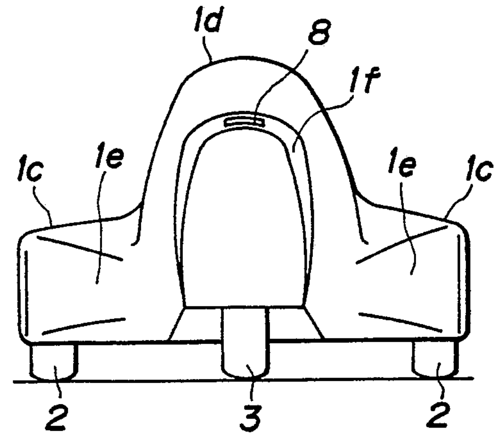


FIG. 6

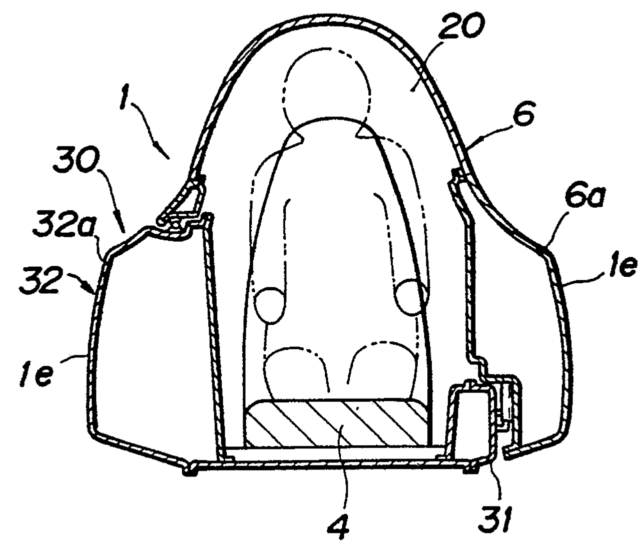

FIG. 7

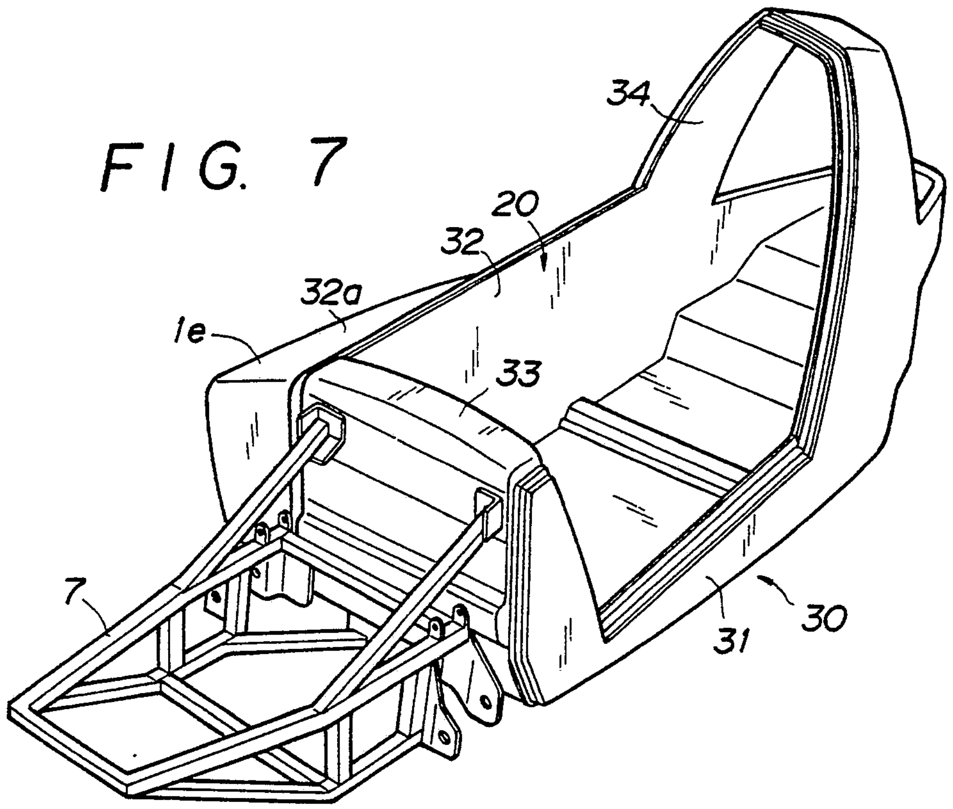


FIG. 8

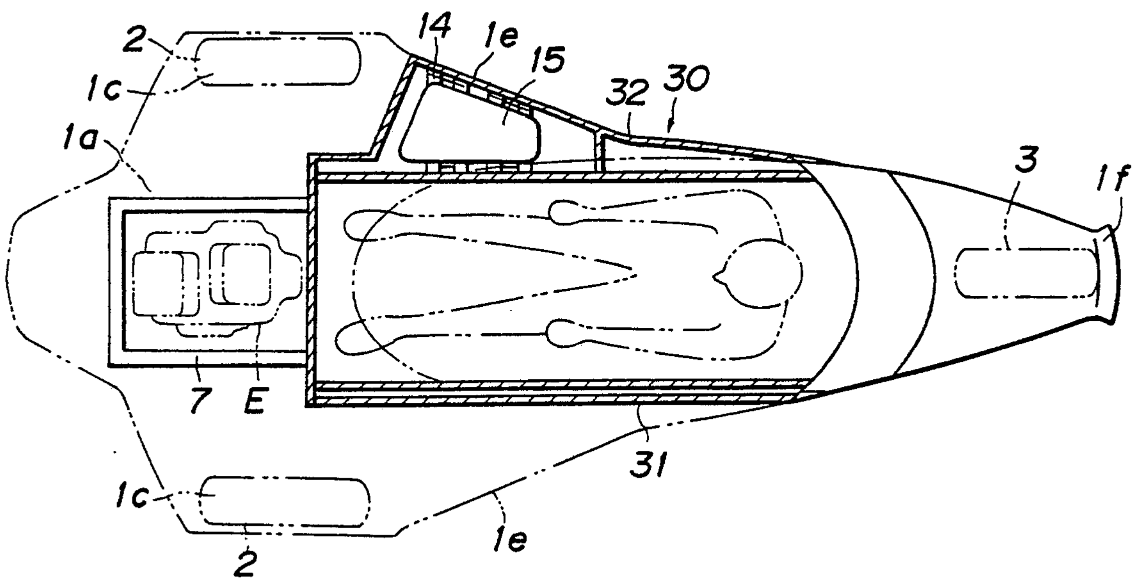

FIG. 9

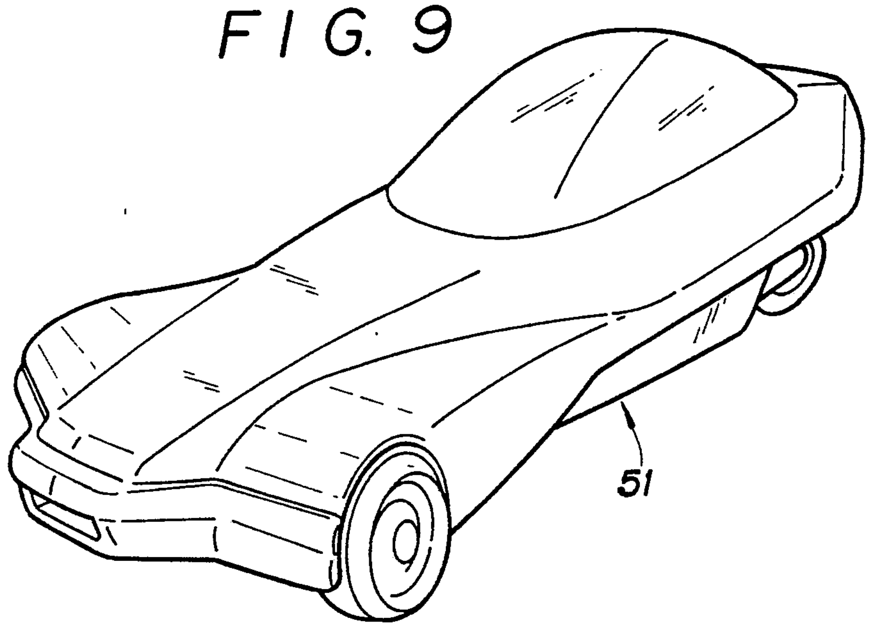


FIG. 10

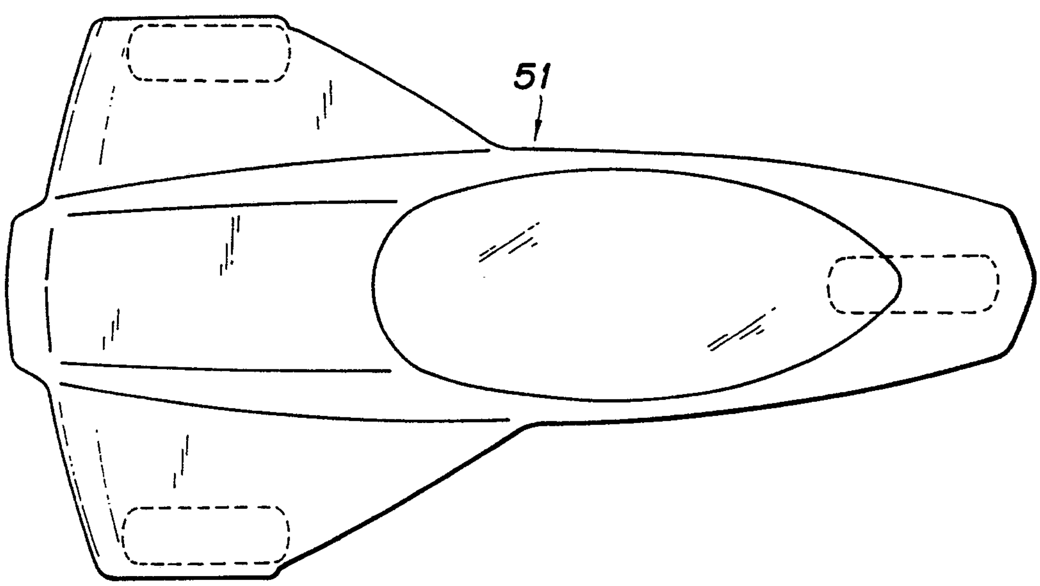

FIG. 11

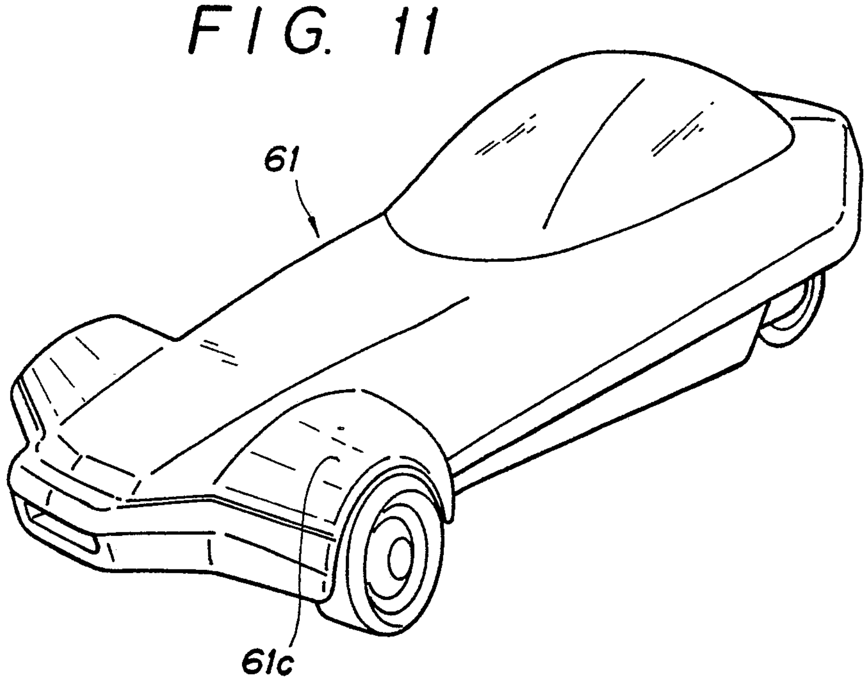


FIG. 12

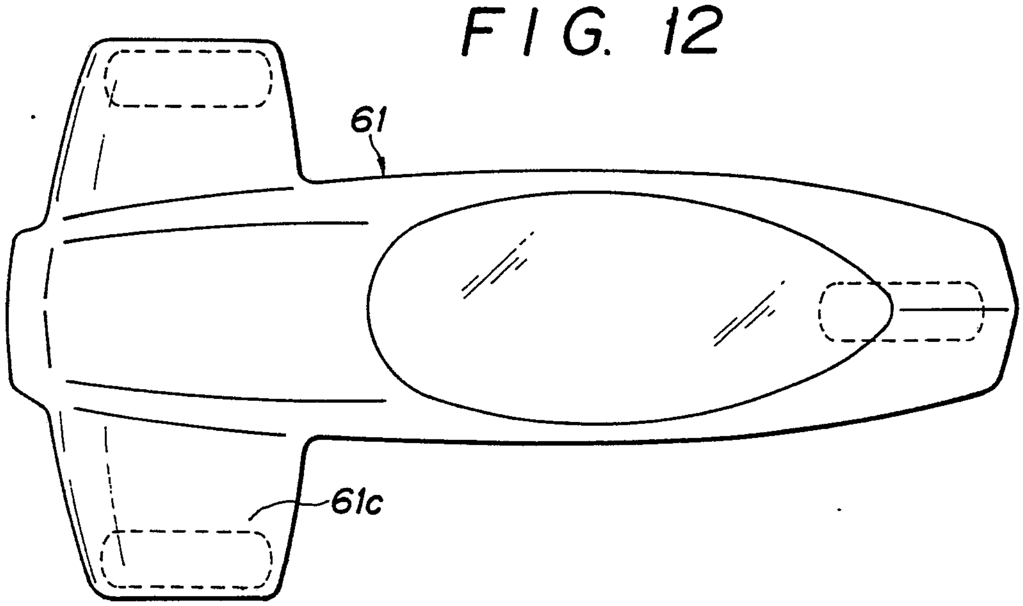

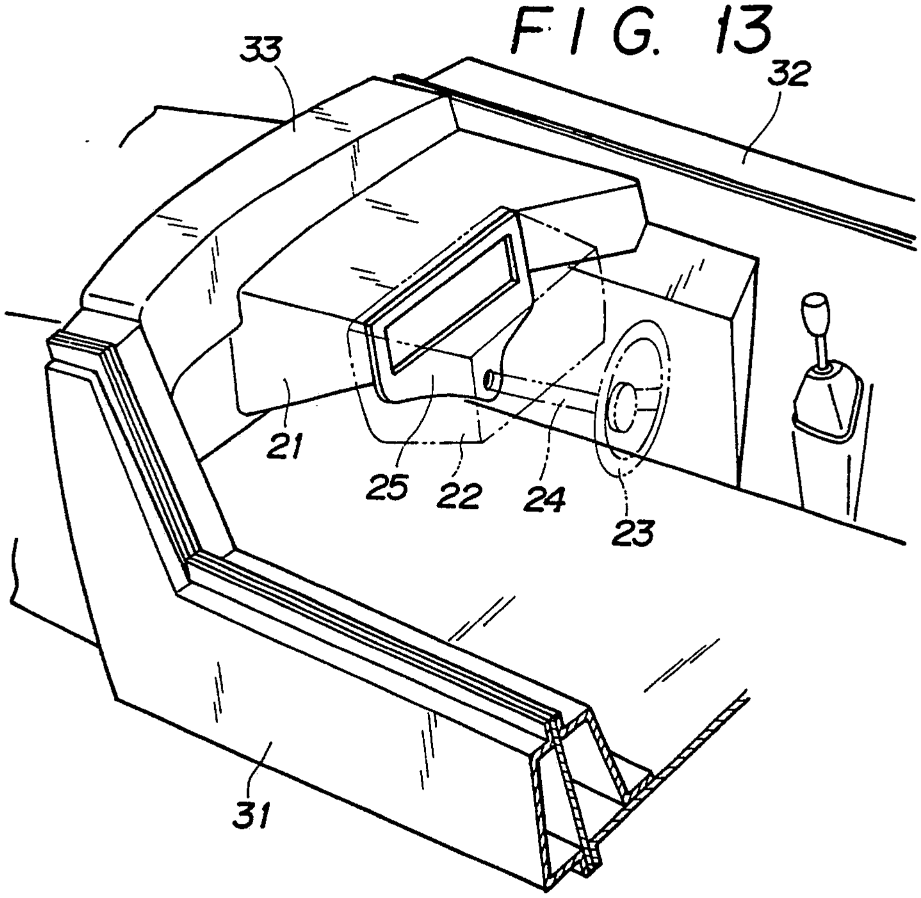


FIG. 13

FIG. 14

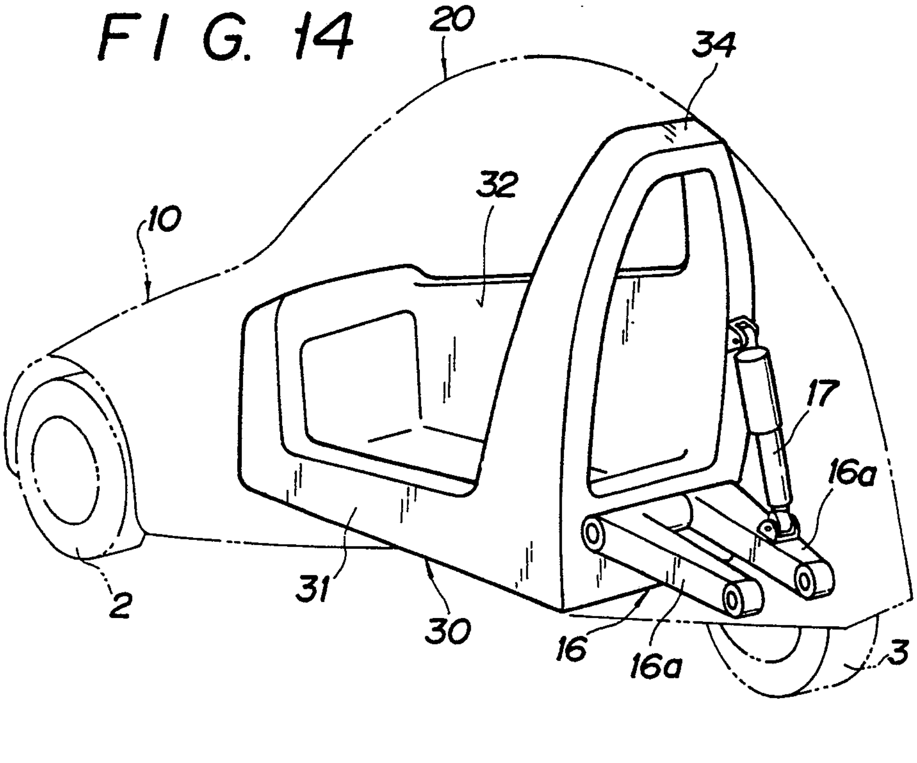

FIG. 15

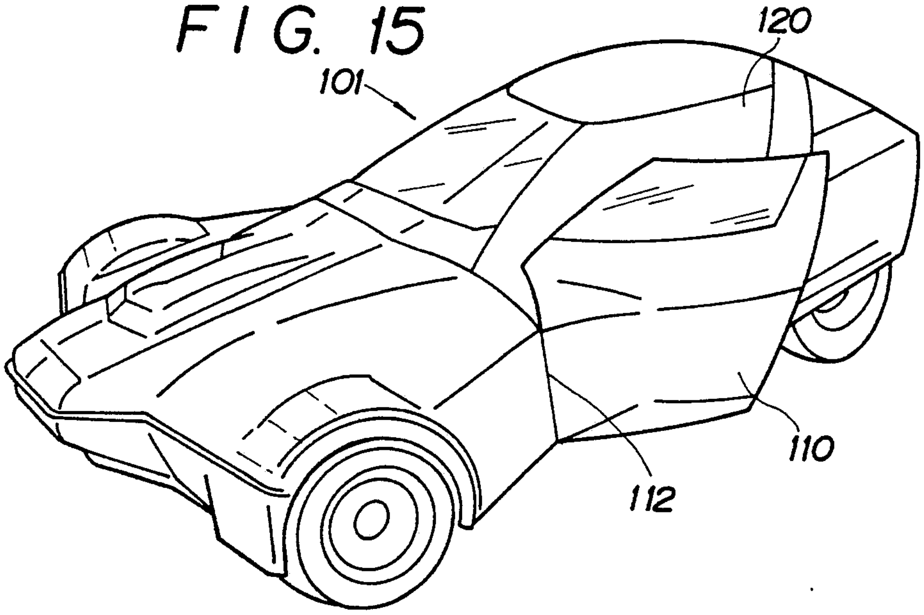
101
120
110
112

FIG. 16

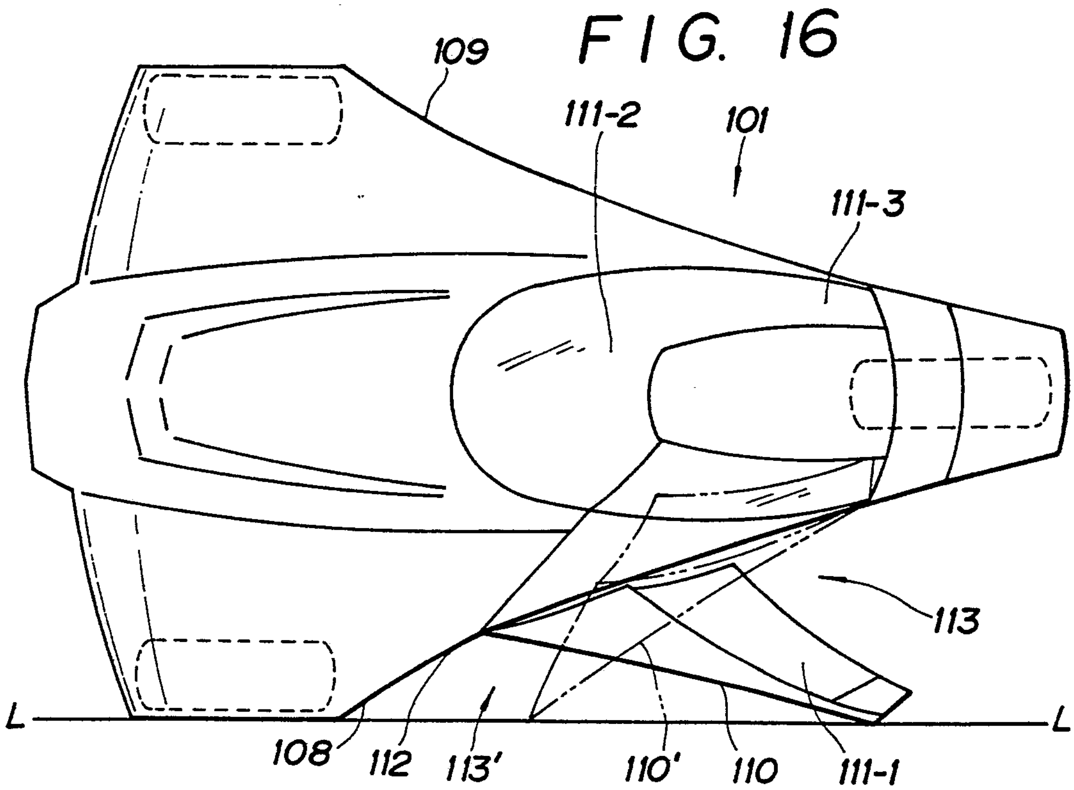
109
111-2
101
111-3
113
L
L
108
112
113'
110'
110
111-1